(19) Europäisches Patentamt / European Patent Office / Office européen des brevets

(11) **EP 2 346 796 B1**

(12) **FASCICULE DE BREVET EUROPEEN**

(45) Date de publication et mention de la délivrance du brevet:
**03.04.2013 Bulletin 2013/14**

(21) Numéro de dépôt: **09756030.4**

(22) Date de dépôt: **15.10.2009**

(51) Int Cl.:
*C05D 9/02* (2006.01)  *C05F 11/00* (2006.01)
*C05F 11/02* (2006.01)  *C07F 19/00* (2006.01)

(86) Numéro de dépôt international:
**PCT/FR2009/051965**

(87) Numéro de publication internationale:
**WO 2010/043819 (22.04.2010 Gazette 2010/16)**

(54) **COMPLEXES METALLIQUES; LEUR UTILISATION POUR LA PREPARATION DE COMPOSITIONS A USAGE AGRICOLE**

»METALLKOMPLEXE, IHRE VERWENDUNG FÜR DIE HERSTELLUNG VON ZUSAMMENSETZUNGEN FÜR DIE VERWENDUNG IN DER LANDWIRTSCHAFT

METAL COMPLEXES; USE THEREOF FOR THE PREPARATION OF COMPOSITIONS FOR AGRICULTURAL USE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **15.10.2008 FR 0856977**

(43) Date de publication de la demande:
**27.07.2011 Bulletin 2011/30**

(73) Titulaire: **Timac Agro International**
**35400 Saint Malo (FR)**

(72) Inventeurs:
• **FUENTES, Marta**
  **E-11407 Jerez de la Frontera (ES)**
• **BAIGORRI, Roberto**
  **E-31620 Huarte/uharte (ES)**
• **BACAICOA, Eva**
  **E-31007 Pamplona (ES)**
• **GARCIA-MINA, Jose Maria**
  **E-31170 Iza (ES)**
• **YVIN, Jean-Claude**
  **F-35400 Saint-Malo (FR)**

(74) Mandataire: **Nevant, Marc et al**
**Cabinet Beau de Loménie**
**158, rue de l'Université**
**75340 Paris Cedex 07 (FR)**

(56) Documents cités:
**WO-A1-02/059063**

• **DATABASE CAPLUS, [Online] 31 décembre 2002 (2002-12-31), WEGLARZ BARBARA ET AL: "Method of obtaining fertilizing agent containing bioavailable iron" XP002534019 extrait de CAPLUS**
• **Anonymous: "Specimen label Brexil Fe 10% Iron" 1 novembre 2002 (2002-11-01), XP002534017 Extrait de l'Internet: URL:http://www.golf-venture.com/labelS/BRE XIL22.pdf> [extrait le 2009-06-29]**
• **MICROMIX INTERNATIONAL LTD: "New company to nourish worl crops" INTERNATIONAL PEST CONTROL, vol. 46, no. 3, juin 2007 (2007-06), pages 155-156, XP002534018**
• **PIAGGESI A ET AL: "Measurements of microelement content in pear leaves as a consequence of foliar sprays with different chelates" ACTA HORTICULTURAE, WAGENINGEN, 1 janvier 2002 (2002-01-01), pages 259-266, XP008107307 ISSN: 0567-7572**

## Description

La présente invention a pour objet de nouveaux complexes métalliques, ainsi que leur utilisation pour la préparation de compositions à usage agricole destinées notamment au traitement de carences en oligoéléments métalliques essentiels chez les plantes.

On sait que les oligoéléments sont nécessaires pour le développement des plantes. Le fer, le manganèse, le bore, le zinc, le molybdène et le cuivre sont ainsi considérés comme des oligoéléments essentiels pour les plantes.

Parmi ces éléments, le fer joue un rôle extrêmement important dans les processus biologiques fondamentaux, tels que la croissance, le développement, la photosynthèse et la respiration des végétaux.

La disponibilité des oligoéléments métalliques, et en particulier du fer, est réduite dans les sols alcalins ou riches en calcaire actif. En effet, dans de telles conditions, ces éléments forment des composés insolubles dans l'eau (hydroxydes, oxydes, carbonates, etc.), qui ne sont pas disponibles pour la plante.

Le manque d'oligoéléments métalliques disponibles au sol, et en particulier le manque de fer, peut altérer la physiologie de la plante. Ainsi, la carence en fer, par exemple, provoque un jaunissement dénommé chlorose ferrique qui touche notamment les jeunes feuilles et affecte le potentiel de production.

Afin de corriger les phénomènes de carences en oligoéléments métalliques observés sur les cultures développées sur des sols basiques ou calcaires, de nouveaux composés visant à maintenir ces éléments disponibles pour la plante ont été développés.

Il s'agit essentiellement de complexes ou chélates métalliques utilisant des ligands polydentés, et en particulier l'acide éthylènediamine-tétracétique (EDTA) et l'acide éthylènediamine-dihydroxyphénylacétique (EDDHA).

Ainsi, le chélate de fer d'EDDHA est largement utilisé pour prévenir et corriger la chlorose ferrique en raison de sa grande stabilité en milieu alcalin (pH compris entre 7 et 10).

Ces chélates métalliques connus présentent néanmoins deux inconvénients majeurs :

- du point de vue nutritionnel, l'absorption de ces chélates organiques par la plante peut nuire aux qualités des fruits ou végétaux cultivés et peut être dangereuse pour la santé du consommateur ;
- d'un point de vue environnemental, ces chélates métalliques, en raison de leur faible biodégradabilité, constituent une source de pollution des sols et de l'eau.

On a également proposé l'utilisation de complexes métalliques à base de substances organiques naturelles présentant des propriétés complexantes telles que les substances humiques, les lignosulfonates ou les tannins.

Ces composés sont beaucoup plus respectueux de l'environnement, en raison de leur caractère naturel, mais leur efficacité reste limitée, dans la mesure où :

- d'une part, ces complexes sont généralement peu solubles et instables dans le sol en raison des phénomènes de floculation et de précipitation se produisant en présence de cations tels que le calcium dans des sols calcaires ; et
- d'autre part, ces complexes ne permettent pas la préparation de produits concentrés en raison de phénomènes d'agrégation moléculaire.

Le brevet US 5366533 décrit une composition comprenant une poudre homogène d'un mélange intime de sous-produit d'agrumes et d'un composé de fer tel que du sulfate ferreux ou ferrique. Une telle composition est destinée à fournir un apport nutritionnel aux plantes.

La demande WO 02/059063 décrit une composition fertilisante qui consiste en une association d'un sel de calcium et d'un sel de magnésium, avec une substance organique choisie parmi un agent structurant, une substance chélatante-acidifiante, un milieu nutritionnel ou un mélange de ces composés.

La demande US 2008/221314 décrit des complexes métalliques comprenant un métal, un premier ligand choisi parmi l'acide humique et ses dérivés, et un second ligand choisi parmi les molécules organiques polydentées. Il a toutefois été constaté que les complexes de ce type conduisent à une libération du métal qui n'est pas optimale pour une utilisation pour le traitement de carences en oligo-éléments métalliques chez les plantes.

Dans ces conditions, la présente invention a pour but de résoudre le problème technique consistant en la fourniture de nouveaux composés métalliques qui ne souffrent pas des inconvénients des composés de l'état de la technique, et en particulier qui présentent une stabilité et une solubilité satisfaisantes pour tous types de sols, notamment basiques et calcaires, qui présentent une efficacité élevée sans poser de problèmes environnementaux et de santé, et qui permettent une meilleure libération du métal.

Dans ce contexte, il a été découvert, et ceci constitue le fondement de la présente invention, qu'il était possible de résoudre ce problème technique d'une manière satisfaisante à l'échelle industrielle, au moyen de nouveaux complexes associant un métal et deux types de ligands différents, dont l'un est d'origine naturelle.

Ainsi, selon un premier aspect, la présente invention a pour objet un complexe métallique caractérisé en ce qu'il comprend :

- au moins un métal choisi parmi les oligoéléments métalliques essentiels pour le développement des plantes ;
- au moins un premier ligand choisi parmi les lignosulfonates, ainsi que les dérivés de ces composés résultant de transformations biologiques ou chimiques, par exemple par oxydation, réduction, ou compostage;
- au moins un second ligand choisi parmi l'acide citrique, l'acide oxalique, l'acide malonique, l'acide succinique, l'acide malique, l'acide glutarique, l'acide phtalique, l'acide téréphtalique l'acide adipique et l'acide saliaplique.

Ainsi, les complexes métalliques selon l'invention peuvent être représentés par la formule générale suivante :

$$[\text{ligand 1}]_n\text{-(métal)}_x\text{-[ligand 2}]_m$$

dans laquelle n, x et m représentent des nombres entiers dépendant du nombre de liaisons ou de coordinations formées entre le métal et les ligands.

D'une façon générale :

- n peut être égal à 1 ou 2;
- x peut être compris 1 et 4;
- m peut être compris entre 1 et 4.

Dans les complexes préférés selon l'invention, n, x et m sont égaux à 1.

Le métal des complexes selon l'invention est un oligoélément métallique essentiel pour le développement des plantes. Ce métal est avantageusement choisi parmi le fer, le manganèse, le bore, le zinc, le molybdène, le nickel, le cobalt et le cuivre. Les composés du fer constituent une classe actuellement préférée de complexes selon l'invention.

Le premier ligand des complexes selon l'invention est choisi parmi les lignosulfonates, ainsi que les dérivés de ces composés résultant de transformations biologiques ou chimiques, par exemple par oxydation, réduction, ou compostage.

Ces produits peuvent se présenter sous forme de sels avec des cations, notamment sous forme de sels de sodium, de potassium ou d'ammonium.

Les lignosulfonates ou lignines sulfonatées sont des sous-produits connus dans la fabrication de pâtes de bois au bisulfite. Il s'agit de polymères solubles dans l'eau présentant des masses moléculaires variées, généralement comprises entre 1000 et 140 000 daltons.

Dans le cadre de la présente invention, tout type de lignosulfonate peut être utilisé. On préférera néanmoins les lignosulfonates provenant de sapins ou d'Eucalyptus.

Le premier ligand des complexes selon l'invention peut encore être choisi parmi des dérivés de lignosulfonates, lesquels dérivés résultent de transformations biologiques ou chimiques, par exemple par oxydation, réduction ou compostage.

Des dérivés résultant d'oxydation peuvent être obtenus à partir des composés précités, soit par injection d'oxygène ou d'air en milieu alcalin, soit par traitement avec un agent oxydant comme par exemple du periodate de sodium ou du permanganate ou persulfate de potassium.

Des dérivés résultant de réduction peuvent être obtenus à partir des composés précités par traitement avec un agent réducteur tel qu'un métal de Zn.

Le second ligand des complexes selon l'invention est généralement choisi parmi les ligands organiques polydentés, c'est-à-dire capables de se lier au métal par au moins deux sites.

Il est à noter que les complexes selon l'invention peuvent comprendre indépendamment :

- un ou plusieurs métal (métaux) ;
- un ou plusieurs premier(s) ligand(s) ;
- un ou plusieurs second(s) ligand(s).

Les composés en résultant sont constitués de mélanges de complexes.

Des complexes métalliques actuellement préférés selon l'invention comprennent :

- le fer, de préférence Fe (III), en tant que métal ;
- un lignosulfonate, en tant que premier ligand ; et
- l'acide citrique en tant que second ligand.

Différents procédés peuvent être utilisés afin de préparer les complexes métalliques selon l'invention.

Ainsi, un premier procédé, actuellement préféré, consiste :

- dans une première étape, à former un complexe ou chélate entre le métal et le second ligand ; puis
- dans une deuxième étape, à former le complexe selon l'invention en mélangeant le complexe/chélate obtenu à la première étape avec le premier ligand.

Cette deuxième étape peut être réalisée :

- soit en ajoutant le complexe/chélate (composé du métal et du second ligand) dans une solution, de préférence aqueuse, du premier ligand ; cet ajout étant réalisé de façon discontinue par fraction;
- soit en ajoutant une solution, de préférence aqueuse, du premier ligand à une solution contenant le complexe/chélate en solution ou précité.

L'homme du métier déterminera facilement les conditions de formation des complexes selon l'invention (pH, pression, température, etc.).

D'une façon générale, les réactions permettant l'obtention des complexes selon l'invention seront réalisées sous agitation continue en phase liquide :

- à un pH compris de préférence entre 7 et 10 ;
- à une température comprise de préférence entre 25 et 45°C ;
- de préférence à pression atmosphérique ;
- pendant une durée comprise de préférence entre 1 heure et 4 heures.

A l'issue de la réaction, les précipités solides éventuellement formés sont séparés par décantation, filtration ou centrifugation.

Un deuxième procédé de préparation des complexes selon l'invention consiste à ajouter simultanément au cours d'une même étape le métal, le premier ligand et le deuxième ligand dans une solution aqueuse.

Dans ce cas, le pH sera ajusté de préférence à la valeur d'environ 8 à l'aide d'hydroxyde de sodium ou de potassium. On utilise de préférence les différents constituants en des quantités stoechiométriques (exprimées par rapport au complexe). Après une durée d'environ 4 heures, les espèces précipitées sont séparées par centrifugation ou par filtration. Au cours de la réaction, la température est de préférence comprise entre 25 et 50°C et la pression est de préférence la pression atmosphérique.

Un troisième procédé de préparation des complexes selon l'invention consiste :

- dans une première étape, à préparer un complexe entre le métal et le premier ligand ; puis
- dans une deuxième étape, à ajouter le second ligand au complexe ainsi préparé.

Les complexes métalliques selon l'invention trouvent notamment application dans le domaine agricole, en particulier comme agents destinés au traitement de carences en métal, notamment au traitement de carence en fer, lorsque le métal de ce composé est le fer.

Ainsi, selon un second aspect, la présente invention a pour objet une composition à usage agricole, comprenant au moins un complexe métallique tel que défini précédemment en association avec un support ou véhicule acceptable en agriculture.

Une telle composition peut se présenter sous forme solide, comme par exemple sous forme de poudres, de granulés ou de comprimés ; ou bien encore sous forme liquide dans un système solvant, notamment aqueux.

D'une façon générale, une composition à usage agricole selon l'invention comprend de 1 à 20 % et de préférence de 3 à 15 % en poids de complexe(s) métallique(s).

Tout type de supports ou véhicules acceptables en agriculture peut être utilisé pour la préparation d'une telle composition.

Parmi les supports solides susceptibles d'être utilisés, on peut citer les argiles comme, en particulier, la sépiolite, l'attapulgite ou la bentonite.

Les compositions liquides ou solides selon l'invention peuvent être utilisées :

- par application directe sur un sol, sur toute la surface du sol ou, de préférence, de façon localisée dans la région des racines des plantes à traiter ; ou
- par application au niveau des feuilles et/ou des plantes à traiter, par tous moyens de distribution appropriés, comme par exemple par pulvérisation dans le cas d'une formulation liquide.

Ces compositions peuvent en outre être introduites dans le système d'irrigation en eau et/ou dans des formulations d'engrais.

D'une manière générale, la quantité de composition à utiliser dépend de la nature de la plante à traiter et du mode d'administration envisagé.

De manière générale, une composition selon l'invention peut être utilisée :

- en une quantité permettant un apport de 50 à 80 grammes de complexe(s) métallique(s) par plant pour le traitement d'arbres fruitiers, par exemple de 20 à 30 grammes par plant dans le cas de la vigne ;
- en une quantité permettant un apport de 10 à 100 kilogrammes, et de préférence de 30 à 40 kilogrammes de complexe(s) métallique(s) par hectare dans le cas de maraîchage.

L'homme du métier saura adapter les quantités à utiliser en fonction du mode d'application choisi. En particulier, des quantités relativement plus faibles sont utilisées lorsque la composition est appliquée dans la région racinaire alors que des quantités relativement plus importantes sont utilisées lorsque la composition est appliquée sur toute la surface du sol.

Ces compositions peuvent être utilisées en une seule application ou bien en applications séquentielles, par exemple de 3 à 5 fois espacées de 15 jours.

Une composition selon l'invention peut en outre comprendre au moins un composé additionnel choisi parmi les nutriments minéraux et les composants biostimulants des plantes.

Ces compositions peuvent également comprendre des composés actifs tels que des pesticides, fongicides, herbicides, nématocides.

Parmi les composés additionnels susceptibles d'être utilisés, on peut citer les hormones, les substances humiques, les extraits d'algues, les acides aminés, les extraits de plantes, l'acide salicylique et les précurseurs ou analogues d'acide salicylique, l'oxyde nitrique et les précurseurs ou analogues d'oxyde nitrique, les nucléotides cycliques.

Selon un troisième aspect, la présente invention concerne l'utilisation d'un complexe métallique tel que défini précédemment comme agent destiné au traitement de carence en métal, ledit métal étant celui du complexe.

L'invention sera maintenant illustrée par les exemples non limitatifs suivants.

Dans ces exemples, et sauf indications contraires, la température est la température ambiante et la pression est la pression atmosphérique.

## EXEMPLE 1 : Préparation d'un complexe lignosulfonate-Fe(III)-citrate selon l'invention

### Etape 1 :

On a ajouté 24,92 kilogrammes de chlorure de fer (III) à 45 kilogrammes d'eau et le mélange a été agité jusqu'à totale dissolution du sel de fer.

A cette solution, on a ajouté 26 kilogrammes d'acide citrique et le milieu réactionnel a été agité jusqu'à dissolution totale de l'acide citrique.

A cette solution, on a ajouté une quantité suffisante d'hydroxyde de potassium pour ajuster le pH du milieu réactionnel à la valeur de 8.

On a ainsi obtenu une solution de citrate de fer contenant 7 % en poids de fer.

### Etape 2 :

On a ajouté 35 kilogrammes de lignosulfonate de potassium (provenant de la Societé Lignotech Iberica) à 30 kilogrammes d'eau et le milieu réactionnel a été mélangé pendant une durée suffisante pour obtenir une suspension.

A cette suspension, on a ajouté par portions 35 kilogrammes de la solution de citrate de fer préparée à l'étape 1 de l'exemple 1 et le milieu réactionnel a été maintenu sous agitation pendant 5 heures à 40°C.

On a ainsi obtenu une suspension contenant 2,5 % en poids de fer sous forme de complexe lignosulfonate-Fe (III)-citrate (45 kg de complexe lignosulfonate-Fe(III)-citrate en solution).

## EXEMPLE 2 : Préparation d'un complexe lignosulfonate-Fe(III)-citrate selon l'invention

On a ajouté 13 kilogrammes de citrate de fer solide (18 % en poids de Fe provenant de la société Merck ou préparé selon le protocole décrit à l'exemple 1) dans 80 kilogrammes d'une solution aqueuse contenant 35 kilogrammes de lignosulfonate de potassium.

Au milieu réactionnel ainsi constitué, on a ajouté une quantité suffisante d'hydroxyde de potassium pour ajuster le pH à la valeur de 8.

Le milieu réactionnel a été maintenu sous agitation au moyen d'un agitateur hélicoïdal, pendant une durée de (4 h) à une température de (25°C) pour obtenir un complexe lignosulfonate-Fe(III)-citrate.

**EXEMPLE 3 : Préparation d'un complexe lignosulfonate modifié-Fe(III)-citrate selon l'invention**

**Etape 1 :**

On a préparé une solution de citrate de fer (7 % en poids de fer) en suivant le protocole expérimental de l'étape 1 de l'exemple 1.

**Etape 2 :**

Préparation du complexe selon l'invention.

On a ajouté 35 kg de lignosulfonate de potassium à 30 kg d'eau et le milieu réactionnel a été mélangé pendant une durée suffisante pour obtenir une suspension.

A cette suspension, on a ajouté 1 kg de periodate de sodium et 0,5 kg d'hydroxyde de sodium et le milieu réactionnel a été maintenu sous agitation pendant 4 h.

A ce milieu réactionnel, on a ajouté par portion 35 kg de la solution de citrate de fer préparée à l'étape 1, le pH a été ajusté à 8,5 et le milieu réactionnel a été maintenu sous agitation pendant 5 h à 40°C.

On a ainsi obtenu une suspension contenant 2,5 % en poids de fer sous forme de complexe lignosulfonate oxydé -Fe(III)-citrate.

**Mise en évidence des propriétés des complexes métalliques selon l'invention**

Dans cette partie expérimentale, les trois produits suivants ont notamment été utilisés :

**- Complexe lignosulfonate-Fe(III) contenant 2,5% en poids de fer complexé.**

Ce produit a été préparé en mélangeant un litre d'une solution aqueuse contenant 33% en poids de lignosulfonate de sodium (obtenu auprès de la société Lignotech Iberica) avec 182 grammes d'une solution de chlorure de fer (III) à 40 % en poids et en ajustant le pH à la valeur de 8 avec de l'hydroxyde de sodium.

On a ainsi obtenu un gel contenant 2,5 % en poids de fer (III) complexé par le lignosulfonate.

Ce gel est partiellement insoluble dans l'eau.

**- Complexe lignosulfonate-Fe(III)-citrate contenant 2,5% en poids de fer complexé**

Ce produit illustratif de l'invention a été préparé en suivant le protocole expérimental de l'exemple 1.

**- Complexe citrate-Fe(III) contenant 7% en poids de fer complexé.**

Ce produit a été préparé en suivant le protocole expérimental de l'étape 1 de l'exemple 1.

**A- Evaluation de l'aptitude des composés testés à maintenir le fer soluble dans un sol en présence de calcium**

Méthodologie

Pour chaque produit testé, on a préparé quatre solutions contenant 20 milligrammes par litre de fer et présentant respectivement un pH de 7, 8, 9 et 10 (le pH étant été ajusté au moyen d'hydroxyde de sodium ou d'acide chlorhydrique).

Quatre solutions analogues ont été préparées, chacune contenant du chlorure de calcium $CaCl_2$ (0,020 M).

Après trois jours, on a filtré ces solutions au travers de filtres présentant une dimension de pores de 0,045 micromètres et on a déterminé la teneur en fer dans les filtres par spectrométrie d'émission atomique à plasma (ICP-EOS, de l'anglais inductively coupled plasma emission optical spectroscopy).

La quantité de fer restant en solution en présence des ions calcium a été calculée par la formule suivante :

$$\% \text{ de fer restant} = 100 \times \left[ \frac{[Fe]_{pHi + Ca}}{[Fe]_{pHi}} \right]$$

dans laquelle :

[Fe]$_{pHi+Ca}$ représente la concentration en fer dans le filtrat d'une solution (contenant du chlorure de calcium 0,020 M) de pH égal à i, exprimée en milligrammes par litre ;

[Fe]$_{pHi}$ représente la concentration en fer dans le filtrat d'une solution ne contenant pas de calcium de pH égal à i, exprimée en milligrammes par litre.

Résultats

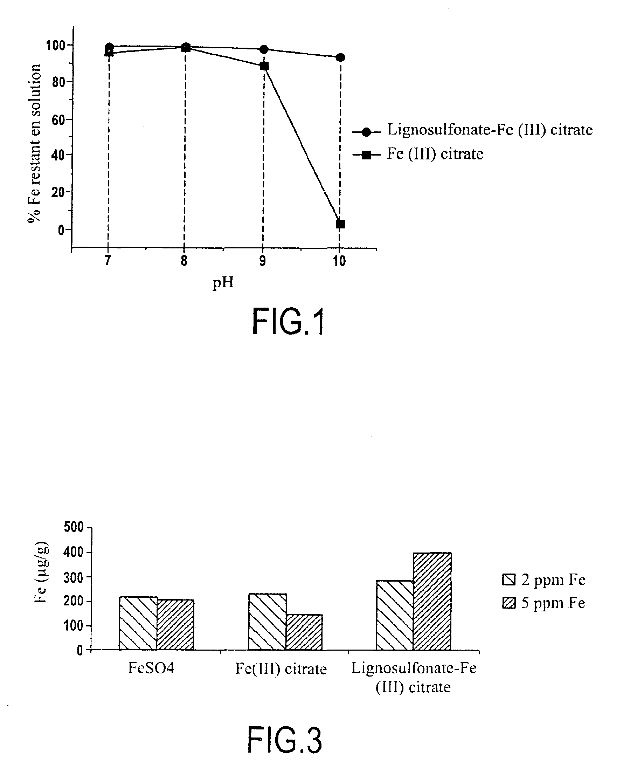

La figure 1 représente le pourcentage en fer restant en solution aux différentes valeurs de pH étudiées.

Il est à noter que le complexe lignosulfonate-Fe(III) n'était pas soluble dans la solution contenant le calcium et n'apparait donc pas sur la figure 1.

Comme on peut le voir sur cette figure, seul le complexe de l'invention permet de maintenir le fer complexé en solution aux différentes valeurs de pH étudiées.

On voit que le fer complexé par le citrate subit une précipitation dans la gamme de pH comprise entre les valeurs de 9 et 10.

Le fer complexé par le lignosulfate seul n'est pas soluble en solution.

Ces résultats montrent l'excellente aptitude des complexes selon l'invention à fournir du fer disponible pour les plantes cultivées dans un sol calcaire.

**B- Détermination de la constante de stabilité et de la capacité de complexation des composés testés**

Méthodologie

On a préparé deux solutions mère de Fe(NO$_3$)$_3$ 0,01 M et de lignosulfonate (LG) 1 g L$^{-1}$ dans KNO$_3$ 0,1 M à pH 6.

On a préparé différentes solutions de complexe simple LG-Fe(III) dans KNO$_3$ 0,1 M (pH 6), ayant une concentration constante en lignosulfonate (100 mg L$^{-1}$), et des concentrations croisssantes en Fe(III) (de 0 à 0,00175 M), en ajoutant lentement la solution mère de Fe(NO$_3$)$_3$ à celle de lignosulfate.

La solution mère de LG a également été utilisée pour préparer, selon le protocole expérimental de l'exemple 1, différentes solutions de complexe double LG-Fe(III)-citrate dans KNO$_3$ 0,1 M (pH 6), ayant une concentration constante en lignosulfonate (10 mg L$^{-1}$), et des concentrations croisssantes en Fe(III) (de 0 à 0,00175 M).

On a mesuré l'intensité de fluorescence (IF) de chaque solution testée à l'aide d'un spectromètre de luminescence Kontron Instruments SFM 25 contrôlé par le logiciel WIND 25 1.50 (Kontron Instruments Ltd.), en utilisant une longueur d'onde d'excitation de 335 nm, et en fixant la longueur d'onde d'émission à 400 nm (valeurs qui correspondent au maximum du spectre d'excitation et d'émission du LG).

La constante de stabilité des complexes de Fe(III), ainsi que la capacité de complexation desdits complexes, ont été déterminées selon le modèle décrit par Ryan et Weber (*Anal. Chem.* 1982, *54*, 986-990). La constante de stabilité conditionelle (*K*) de formation d'un complexe entre un ion métallique et un ligand à pH et force ionique constants, est défini par l'équation :

$$K = \frac{[ML]}{[M][L]} \qquad\qquad (1)$$

où [ML] est la concentration molaire du complexe métal-ligand, [M] est la concentration molaire du métal libre, et [L] est la concentration molaire des ligands non-complexés. La conservation de la masse pour le métal et le ligand s'écrit :

$$C_M = [M] + [ML] \qquad\qquad (2)$$

$$C_L = [L] + [ML] \qquad\qquad (3)$$

où $C_M$ est la concentration totale en ion métallique, et $C_L$ est définie comme la concentration en ligand totale équivalant à la fin de la titration en terme de concentration molaire en ion métallique.

La fraction de ligand lié peut être exprimée en combinant les équations (1) et (3):

$$v = \frac{[ML]}{C_L} = \frac{K[M]}{1 + K[M]} \qquad\qquad (4)$$

ce qui, en remplaçant [M] à l'aide de l'équation (2), donne :

$$v = \frac{K(C_M - vC_L)}{1 + K(C_M - vC_L)} \qquad\qquad (5)$$

D'autre part, comme le ligand passe de l'état non-lié à l'état lié durant la titration, l'efficacité quantique varie linéairement selon l'équation:

$$v = \frac{I_0 - I}{I_0 - I_{ML}} \qquad\qquad (6)$$

où I est l'intensité de fluorescence totale mesurée, $I_0$ est l'intensité de fluorescence en l'absence d'ion métallique, et $I_{ML}$ est l'intensité de fluorescence du complexe saturé en métal.

On tire de l'équation (5) la valeur de $v$ :

$$v = \left(\frac{1}{2KC_L}\right)\left(1 + KC_L + KC_M - \sqrt{(1 + KC_L + KC_M)^2 - 4K^2 C_L C_M}\right) \qquad (7)$$

En combinant les équations (6) et (7), on obtient une courbe qui représente les intensités de fluorescence mesurées en fonction de la concentration totale en ion métallique ($C_M$) :

$$I = I_0 + (I_{ML} - I_0)\left(\frac{1}{2KC_L}\right)\left(1 + KC_L + KC_M - \sqrt{(1 + KC_L + KC_M)^2 - 4K^2 C_L C_M}\right) (8)$$

Pour chaque couple de données, on peut résoudre l'équation (8) par analyse de regression non-linéaire de K, $C_L$ et $I_{ML}$. Le logiciel Origin 6.1 (OriginLab Corporation, Northampton, MA) a été utilisé pour les calculs.

Enfin, la capacité de complexation (CC), définie comme la quantité de sites de liaison actifs par unité de masse de LG, est calculée selon l'équation (9) :

$$CC = \left(\frac{C_L}{[LG]_{tot}}\right) \qquad\qquad (9)$$

où $[LG]_{tot}$ est la concentration totale en lignosulfonate.

Résultats

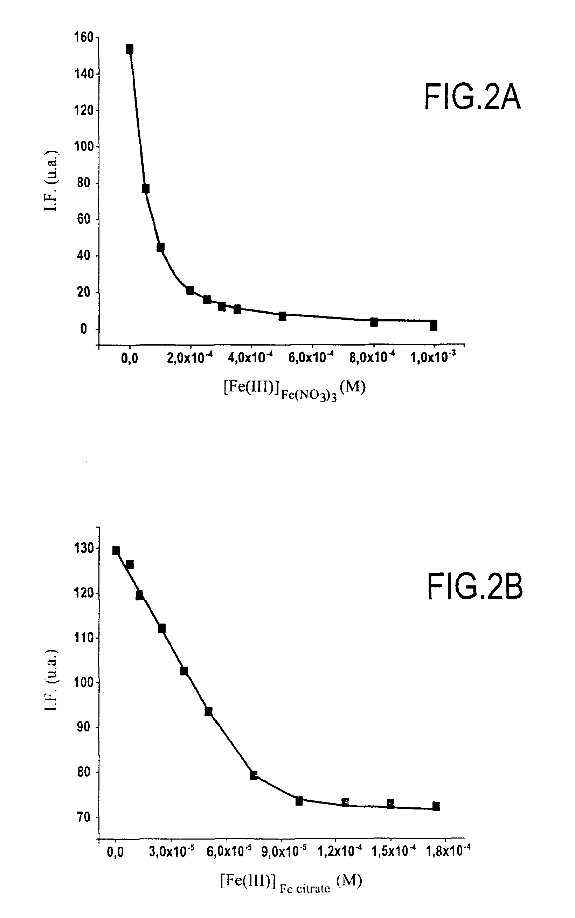

Les résultats ainsi obtenus sont rassemblés dans le tableau ci-dessous, et représentés aux Figures 2A et 2B, dans lesquels $[Fe(III)]_{Fe(NO3)3}$ représente le complexe simple LG-Fe(III) et $[Fe(III°]_{Fe\text{-}citrate}$ représente le complexe double LG-Fe(III)-citrate.

| Echantillon | $R$ | log $K$ | $CC_{Fe}$ (mmol/g LG) |
|---|---|---|---|
| $[Fe(III)]_{Fe(NO3)3}$ | 0,999 | 4,6 $\pm$ 0,1 | 0,5 $\pm$ 0,1 |
| $[Fe(III°]Fe\text{-citrate}$ | 0,998 | 5,4 $\pm$ 0,1 | 8,0 $\pm$ 0,4 |

Comme on peut le voir, la constante de stabilité du complexe LG-Fe(III)-citrate (log $K$ = 5,4) est environ 6 fois supérieure à celle du complexe LG-Fe(III) (log $K$ = 4,6). De plus, la capacité de complexation du complexe LG-Fe(III)-citrate (8,0 mmol/g LG) est 16 fois supérieure à celle du complexe LG-Fe(III) (0.5 mmol/g LG).

Ces résultats montrent donc la supériorité des complexes doubles selon l'invention par rapport aux complexes simples correspondants, dans la mesure où les complexes doubles permettent de lier une plus grande quantité de métal, avec une stabilité accrue.

**C- Etude in vivo**

Dans cette étude, on a évalué l'aptitude des composés testés à fournir du fer sous forme disponible pour des plants de concombres cultivés dans un sol calcaire.

Méthodologie

Des graines de concombres (*Cucumis, Sativus L. cv. Ashley)* ont été disposées dans des pots en polyéthylène contenant de la perlite humidifiée avec une solution de sulfate de calcium $CaSO_4$ (1 mM). Les pots ont été placés dans une chambre de germination à 24°C et 85% d'humidité relative pendant une semaine, à l'obscurité pendant les 5 premiers jours puis à une photopériode de 12/12 h jour/nuit.

Les plants ainsi obtenus ont été transférés dans les cellules individuelles d'une boîte en polyéthylène.

Chaque cellule a été préalablement remplie de perlite imprégnée d'une solution de nutrition (pH = 6) contenant :

- 1 $\mu$M Fe-EDDHA ;
- 2 mM $Ca(NO_3)_2$ ;
- 0,75 mM $K_2SO_4$ ;
- 0,65 mM $MgSO_4$ ;
- 0,5 mM $KH_2PO_4$ ;
- 50 $\mu$M KCl ;
- 10 $\mu$M $MnS_4$ ;
- 0,5 $\mu$M $CuSO_4$ ;
- 0,5 $\mu$M $ZnSO_4$ ; et
- 0,35 $\mu$M $NaMoO_4$.

Les plants ont été cultivés en chambre de croissance (intensité lumineuse : 250 mol m$^{-2}$s$^{-1}$) avec une photo-période de 15/9h jour/nuit, une température moyenne de 28/21°C (jour/nuit) et une humidité relative de 70 à 75%.

Après le développement de la première feuille, trente plants ont été transférés dans des pots en plastique opaque de 1 litre contenant chacun 600 grammes d'un sol calcaire et 40 grammes de perlite.

Les pots ont été arrosés en ajoutant 230 millilitres d'une solution de $Ca(NO_3)_2$ (9 mM) et 10 millilitres d'une solution de $K_2HPO_4$ (0,96 M).

Trois produits ont été testés :

- les complexes Fe(III)-citrate et lignosulfonate-Fe(III)-citrate mentionnés précédemment
- $Fe(SO_4)$ (obtenu auprès de la société PANREAC SA)

Le complexe Fe-lignosulfonate n'a pas été testé dans ce cas, dans la mesure où ce produit n'est pas soluble dans l'eau.

Cinq échantillons identiques de chaque produit ont été testés à deux doses différentes correspondant à un apport en fer de 2 et 5 milligrammes par kilogramme de sol.

Chaque plant a été placé dans une chambre de pousse (photopériode : 15/9h jour/nuit ; 70-85% d'humidité relative ; température 15°C/24°C) et arrosé deux fois par semaine avec de l'eau déionisée jusqu'à capacité totale d'irrigation (240 millilitres).

Après vingt jours, les plants ont été récoltés et les feuilles ont été séchées à l'étuve à 40°C pendant 72 heures.

Les feuilles séchées ont été broyées avec un broyeur en titane.

0,5 g de broyat a été digéré dans des pots en Téflon de type « bombes de digestion » avec 2 ml de peroxyde d'hydrogène 30% et 8 ml d'acide nitrique 65%. La digestion a été réalisée pendant 30 minutes à 200°C dans un micro-ondes Ethos de Millestone. Les digestions sont jaugées à 25 ml avec de l'eau distillée de qualité MilliQ.

La teneur totale en fer dans les feuilles a été déterminée par ICP-EOS.

Résultats

Les résultats ainsi obtenus sont représentés à la figure 3.

Comme on peut le voir sur cette figure, les complexes selon l'invention présentent une efficacité très supérieure à celle du sulfate de fer et du citrate de fer en terme de concentration de fer dans les feuilles des plantes traitées.

Cet effet est particulièrement significatif à la dose de 5 mg/kg de fer dans le sol.

**D- Etude in vivo**

Dans cette étude, on a évalué l'aptitude des composés testés à fournir du fer sous forme disponible pour des pêchers.

L'expérience a été effectuée sur des pêchers *(Prunus persica)* âgés de 6 ans, plantés dans une parcelle expérimentale dont le sol est calcaire, avec une texture de loam argileux, un pH élevé (8,5), et une faible teneur en fer (5,8 mg par kg de sol).

Deux produits ont été testés:

- le complexe lignosulfonate-Fe(III)-citrate contenant 2,5% en poids de fer complexé, obtenu selon le protocole expérimental de l'exemple 1,
- un complexe acide humique-Fe(III)-citrate contenant 3,8% en poids de fer complexé, obtenu selon le protocole expérimental de l'exemple 1 de la demande US 2008/221314.

Chaque produit a été appliqué deux fois par micro-irrigation, à 18 jours d'intervalle, sur six ensembles de deux arbres choisis de manière aléatoire sur la parcelle.

Trente feuilles par arbre ont été prélevées 20 jours, 41 jours, 61 jours et 76 jours après la première application ; ces feuilles ont été séchées à l'étuve à 40°C pendant 72 heures, puis broyées avec un broyeur en titane.

La teneur totale en fer a été déterminée à partir de 0,5g de broyat digéré dans des pots en Téflon de type « bombes de digestion » avec 2 ml de peroxyde d'hydrogène à 30% et 8 ml d'acide nitrique à 65%. La digestion a été réalisée pendant 30 minutes à 200°C dans un micro-ondes Ethos de Millestone. Les digestions sont jaugées à 25 ml avec de l'eau distillée de qualité MilliQ, puis analysées par ICP-EOS.

La teneur en fer extractible par HCl a été déterminée à partir de 2g de broyat, transféré dans un tube auquel on a ajouté 20 ml de HCl 1N. Les tubes ont été agités pendant 4h, centrifugés pendant 10 min à 12000g, et le surnageant a été filtré sur papier-filtre. La teneur en fer du filtrat a été analysée par ICP-EOS.

Résultats

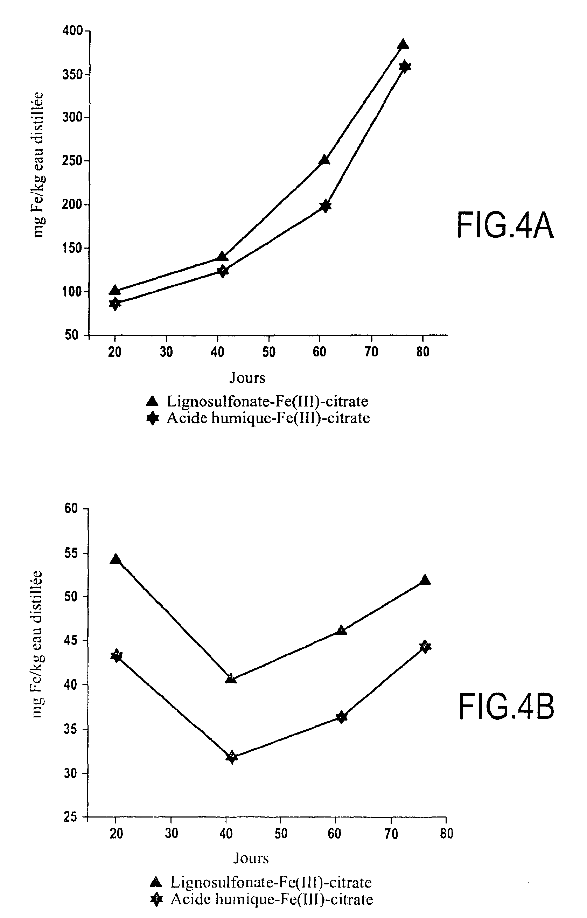

Les résultats ainsi obtenus sont représentés aux figures 4A et 4B.

Comme on peut le voir sur ces figures, la teneur en fer totale (fig. 4A) et extractible par HCl (fig. 4B) dans les feuilles de pêcher traitées avec le complexe double à base de lignosulfonate est supérieure à celle des feuilles traitées avec le complexe double à base d'acide humique.

**Revendications**

1. Complexe métallique **caractérisé en ce qu'**il comprend :

   - au moins un métal choisi parmi les oligo-éléments métalliques essentiels pour le développement des plantes ;
   - au moins un premier ligand choisi parmi les lignosulfonates, ainsi que les dérivés de ces composés résultant de transformations biologiques ou chimiques, par exemple par oxydation, réduction, ou compostage ;
   - au moins un second ligand choisi parmi l'acide citrique, l'acide oxalique, l'acide malonique, l'acide succinique, l'acide malique, l'acide glutarique, l'acide phtalique, l'acide téréphtalique, l'acide adipique et l'acide salicylique.

**2.** Complexe selon la revendication 1, **caractérisé en ce que** le métal précité est choisi parmi le fer, le manganèse, le bore, le zinc, le molybdène, le nickel, le cobalt et le cuivre.

**3.** Complexe selon la revendication 1 ou 2, **caractérisé en ce que** le premier ligand précité est un lignosulfonate.

**4.** Complexe selon l'une des revendications 1 à 3, **caractérisé en ce que**:

- le métal précité est le fer, de préférence Fe (III);
- le premier ligand précité est un lignosulfonate; et
- le second ligand est l'acide citrique.

**5.** Composition à usage agricole, **caractérisée en ce qu'**elle comprend au moins un complexe métallique selon l'une des revendications 1 à 4 en association avec un support ou véhicule acceptable en agriculture.

**6.** Composition selon la revendication 5, **caractérisée en ce qu'**elle comprend de 1 à 20 %, et de préférence de 3 à 15 % en poids de complexe(s) métallique(s).

**7.** Composition selon la revendication 5 ou 6, **caractérisée en ce qu'**elle comprend au moins un composé additionnel choisi parmi les nutriments minéraux et les composants biostimulants des plantes.

**8.** Composition selon l'une des revendications 5 à 7, **caractérisé en ce qu'**elle se présente sous forme solide (poudre, granulés ou comprimés) ou sous forme liquide.

**9.** Utilisation d'un complexe métallique selon l'une des revendications 1 à 4 comme agent destiné au traitement de carence en métal, ledit métal étant celui dudit complexe.

**10.** Utilisation selon la revendication 9, **caractérisée en ce que** ledit complexe métallique est appliqué en une quantité de 50 à 80 grammes par plant, pour le traitement d'arbres fruitiers ou en une quantité de 30 à 40 kilogrammes par hectare dans le cas du maraîchage.


**Claims**

**1.** A metal complex **characterized in that** it comprises:

- at least one metal selected from metal trace elements essential for the development of plants;
- at least one first ligand selected from lignosulfonates, as well as from derivatives of these compounds resulting from biological or chemical transformations, for example by oxidation, reduction, or composting;
- at least one second ligand selected from citric acid, oxalic acid, malonic acid, succinic acid, malic acid, glutaric acid, phthalic acid, terephthalic acid, adipic acid and salicylic acid.

**2.** The complex according to claim 1, **characterized in that** the aforementioned metal is selected from iron, manganese, boron, zinc, molybdenum, nickel, cobalt and copper.

**3.** The complex according to claim 1 or 2, **characterized in that** the first aforementioned ligand is a lignosulfonate.

**4.** The complex according to one of claims 1 to 3, **characterized in that** :

- the aforementioned metal is iron, preferably Fe (III);
- the first aforementioned ligand is a lignosulfonate; and
- the second ligand is citric acid.

**5.** A composition for agricultural use, **characterized in that** it comprises at least one metal complex according to one of claims 1 to 4 in combination with an agricultural acceptable support or carrier.

**6.** The composition according to claims 5, **characterized in that** it comprises from 1 to 20%, preferably from 3 to 15% by weight of metal complex(es).

7. The composition according to claim 5 or 6, **characterized in that** it comprises at least one additional compound selected from mineral nutrients and the biostimulant components for plants.

8. The composition according to one of claims 5 to 7, **characterized in that** it is in the form of a solid (powder, granules or tablets) or of a liquid.

9. Use of a metal complex according to one of claims 1 to 4 as an agent intended for treating metal deficiency, said metal being that of said complex.

10. The use according to claim 9, **characterized in that** said metal complex is applied in an amount from 50 to 80 grams per plant, for treating fruit trees or in an amount from 30 to 40 kilograms per hectare in the case of market gardening.

**Patentansprüche**

1. Metallkomplex, **dadurch gekennzeichnet, daß** er umfaßt:

   - wenigstens ein Metall, das aus den für die Entwicklung der Pflanzen essentiellen metallischen Spurenelementen ausgewählt ist,
   - wenigstens einen ersten Liganden, der aus den Ligninsulfonaten sowie den Derivaten dieser Verbindungen, die aus biologischen oder chemischen Umwandlungen, zum Beispiel durch Oxidation, Reduktion oder Kompostierung hervorgehen, ausgewählt ist,
   - wenigstens einen zweiten Liganden, der aus Citronensäure, Oxalsäure, Malonsäure, Bernsteinsäure, Apfelsäure, Glutarsäure, Phthalsäure, Terephthalsäure, Adipinsäure und Salicylsäure ausgewählt ist.

2. Komplex nach Anspruch 1, **dadurch gekennzeichnet, daß** das vorgenannte Metall aus Eisen, Mangan, Bor, Zink, Molybdän, Nickel, Cobalt und Kupfer ausgewählt ist.

3. Komplex nach Anspruch 1 oder 2, **dadurch gekennzeichnet, daß** der vorgenannte erste Ligand ein Ligninsulfonat ist.

4. Komplex nach einem der Ansprüche 1 bis 3, **dadurch gekennzeichnet, daß**:

   - das vorgenannte Metall Eisen, vorzugsweise Fe(III) ist,
   - der vorgenannte erste Ligand ein Ligninsulfonat ist und
   - der zweite Ligand Citronensäure ist.

5. Zusammensetzung für landwirtschaftliche Zwecke, **dadurch gekennzeichnet, daß** sie wenigstens einen Metallkomplex nach einem der Ansprüche 1 bis 4 in Verbindung mit einem in der Landwirtschaft verträglichen Träger oder Vehikel umfaßt.

6. Zusammensetzung nach Anspruch 5, **dadurch gekennzeichnet, daß** sie 1 bis 20 Gew.-% und vorzugsweise 3 bis 15 Gew.-% Metallkomplex(e) umfaßt.

7. Zusammensetzung nach Anspruch 5 oder 6, **dadurch gekennzeichnet, daß** sie wenigstens eine zusätzliche Verbindung, die aus den mineralischen Nährstoffen und den biostimulierenden Bestandteilen der Pflanzen ausgewählt ist, umfaßt.

8. Zusammensetzung nach einem der Ansprüche 5 bis 7, **dadurch gekennzeichnet, daß** sie in fester Form (Pulver, Granulaten oder Tabletten) oder in flüssiger Form vorliegt.

9. Verwendung eines Metallkomplexes nach einem der Ansprüche 1 bis 4, als Wirkstoff zur Behandlung von Metallmangel, wobei das Metall das des Komplexes ist.

10. Verwendung nach Anspruch 9, **dadurch gekennzeichnet, daß** der Metallkomplex in einer Menge von 50 bis 80 Gramm pro Pflanze für die Behandlung von Obstbäumen oder in einer Menge von 30 bis 40 Kilogramm pro Hektar im Fall des Gemüseanbaus angewandt wird.

FIG.1

FIG.3

FIG.2A

FIG.2B

FIG.4A

▲ Lignosulfonate-Fe(III)-citrate
✦ Acide humique-Fe(III)-citrate

FIG.4B

▲ Lignosulfonate-Fe(III)-citrate
✦ Acide humique-Fe(III)-citrate

**RÉFÉRENCES CITÉES DANS LA DESCRIPTION**

**Documents brevets cités dans la description**

- US 5366533 A
- WO 02059063 A
- US 2008221314 A